# DEMANDE DE BREVET EUROPEEN

(11) **EP 0 945 351 A1**
(43) Date de publication de la demande: **29.09.1999**
(21) Numéro de dépôt: 98430008.7
(22) Date de dépôt: 27.03.1998
(51) Int. Cl.: B65B 69/00

(54) **Outil de décerclage**

(71) Demandeur: STORM, 84000 Avignon (FR)
(72) Inventeur: Romain, André, 13890 Mouries (FR); Degez, Claude, 84000 Avignon (FR)
(74) Mandataire: Domange, Maxime

(57) **Abrégé**

L'outil de décerclage (20) suivant l'invention, pour bobine (2), de bandes de matériau maintenues enroulées par au moins un feuillard (1), comporte au moins une lame de coupe (3), comportant elle-même une âme (3₁), définissant le plan de coupe de direction XX' et une semelle (3₂) qui lui est perpendiculaire; laquelle lame (3) est montée sur un support mobile (10), linéairement dans la direction XX' de coupe et par rapport au corps de l'outil (20). L'extrémité distale (8) de ladite lame (3) se termine en pointe apte à s'enfiler sous ledit feuillard (1); une contre-lame (5) fixe avec une surface d'appui (5₁) montée solidaire du corps (11) de l'outil (20) comporte une arête (6) de butée en forme d'ergot au-dessus de la surface d'appui (5₁) recevant ledit feuillard (1) et perpendiculaire à la direction XX' de coupe; l'un des bords (5₂) de ladite contre-lame (5) est situé dans l'alignement d'une face de l'âme (3₁) qui, en se déplaçant, vient tangenter ledit bord (5₂), la surface d'appui (5₁) de la contre-lame (5) étant parallèle et située au-dessous de la semelle (3₂) de la lame de coupe (3).

## Description

La présente invention a pour objet un outil de décerclage pour bobine de bandes de matériau maintenues enroulées par au moins un feuillard, lesdites bandes de matériau pouvant être de tout type, tel qu'en métal (acier, aluminium,...), papier, carton, matière plastique ou autre produit flexible ou semi-flexible pouvant exister en plaque ou en bande.

Le secteur technique de l'invention est le domaine de l'enroulage et du déroulage de telles bandes de matériau, et leur cerclage puis décerclage par un feuillard les maintenant périphériquement enroulées.

L'application principale de l'invention est le décerclage de bobines de bandes métalliques qui ont été cerclées préalablement telles que dans des lignes de parachèvement des métaux, lesquelles bandes sont maintenues enroulées par au moins un feuillard, métallique ou non, pour être stockées et transportées facilement.

A ce jour, quand on veut ensuite décercler ou défeuillarder une de ces bandes, on utilise essentiellement des outils à main, en particulier des cisailles, dont on doit passer la mâchoire la plus fine entre le feuillard et la périphérie de la bande à côté de l'agrafe maintenant les deux extrémités du feuillard assemblées : cette agrafe décolle en effet l'une de ses extrémités et permet donc d'y enfiler la mâchoire de la cisaille, car quand le feuillard est très tendu, il n'est pas possible de glisser celle-ci à un autre endroit, la découpe se faisant après engagement du feuillard entre les deux mâchoires de la cisaille ; il faut cependant préalablement tourner la bobine pour que ladite agrafe soit située dans la bonne position pour l'opérateur, ce qui risque de marquer la dernière spire de la bobine quand l'agrafe passe dans les rouleaux permettant la rotation de celle-ci.

De plus, quand le décerclage peut être ainsi réalisé par la cisaille manuelle, ce qui prend déjà du temps, l'opérateur doit faire attention au risque de coup de fouet du feuillard qui est en général sous tension et se détend alors comme un ressort; or, l'opérateur doit pourtant récupérer ledit feuillard une fois coupé, pour l'écarter de l'endroit du travail et l'éliminer, sachant que ces feuillards sont très coupants; de plus, outre les blessures qu'ils peuvent provoquer sur les opérateurs, ils peuvent également couper les flexibles hydrauliques passant à proximité.

Il a certes été développé certaines machines de type semi-automatique pour réduire le temps de décerclage, telles que celles décrites dans le brevet EP 281 942 publié le 14 septembre 1988 sous priorité allemande: celui-ci enseigne en particulier une machine d'enlèvement de fil, de la société B+G-Frdertechnik GMBH, pour des balles telles que de cellulose, et décrivant un dispositif de préhension avec lequel les liens métalliques que l'on veut couper sont écartés de la balle, et deux barres de coupe de forme allongée, pourvues de dents disposées à intervalles réguliers sur leur côté tranchant : un tel dispositif de décerclage n'est adapté qu'à des matériaux souples, tel que la cellulose, mais n'est pas applicable à des bandes de matériau rigide, comme les bobines métalliques.

On connaît également différents types de machines pour déclercler des bobines métalliques et comportant, soit un couteau devant s'introduire sous l'agrafe, tel qu'indiqué précédemment pour les opérations manuelles, ou encore des dispositifs de coupe par burin ou fraisage par l'extérieur du feuillard, avec des palpeurs limitant la course pour ne pas endommager la bobine située en-dessous, mais aucune de ces machines n'est vraiment fiable et donc non complètement automatisable et ne satisfait l'ensemble des objectifs auxquels peut répondre la présente invention.

En effet, le problème posé est de pouvoir décercler des bobines d'une manière fiable et répétitive, même éventuellement à la main, quel que soit le positionnement et la tension de cerclage du feuillard sur la périphérie de la bande et sans tenir compte ni utiliser l'emplacement de son agrafe de maintien, la découpe pouvant être réalisée en tout point de la circonférence, et cela sans trop endommager le matériau de la bobine située en-dessous; de plus, il doit être possible de récupérer ledit feuillard une fois coupé, pour l'éliminer en évitant qu'il puisse tomber après avoir été coupé; l'ensemble de ces opérations depuis le repérage alors nécessaire de la position du feuillard par rapport à l'axe ZZ' de la bobine, puis sa découpe et enfin sa récupération devant pouvoir être automatisées sur une même machine.

Une solution au problème posé est un outil de décerclage pour bobine de bandes de matériau maintenues enroulées par au moins un feuillard, et comportant au moins une lame de coupe, tel que ladite lame de coupe comporte une âme de forme générale triangulaire, définissant le plan de coupe de direction XX', et une semelle qui lui est solidaire et perpendiculaire, et est montée sur un support mobile linéairement dans la direction XX' de coupe et par rapport au corps de l'outil ; l'extrémité distale, par rapport à son support, de ladite lame de coupe se termine en pointe apte à s'enfiler sous ledit feuillard. Une contre-lame fixe, avec surface d'appui du feuillard, et montée solidaire du corps de l'outil, comporte une arête de butée en forme d'ergot linéaire, en saillie au-dessus de la surface d'appui recevant ledit feuillard et perpendiculaire à la direction XX' de coupe; l'un des bords de ladite contre-lame est situé dans l'alignement d'une face de l'âme, de telle sorte qu'en se déplaçant vers le corps de l'outil, celle-ci vient tangenter ledit bord; la surface d'appui de la contre-lame est parallèle et située au-dessus de la semelle de la lame de coupe.

Dans un mode préférentiel de réalisation, pour maintenir et prendre une des extrémités du feuillard coupé afin de pouvoir l'enlever de la zone de coupe, l'outil de décerclage décrit ci-dessus comporte également une lame de maintien montée sur le même support que la lame de coupe et constitué d'une semelle disposée parallèlement et du côté opposé à celle de ladite lame de coupe par rapport à l'âme de celleci et face à ladite contre-lame dont elle recouvre la surface d'appui lors du déplacement linéaire du support vers le corps de l'outil ; ladite lame de maintien est associée à un dispositif à ressort solidaire du support de la lame de coupe et apte à maintenir une pression de contact donnée entre la face inférieure de la lame de maintien et la surface de la contre-lame, afin de pouvoir pincer ainsi entre elles l'extrémité du feuillard qui a été coupé.

Un tel outil de décerclage nécessite bien sûr une alimentation de type hydraulique ou pneumatique pour assurer le rapprochement linéaire de la lame de coupe vers le corps de l'outil supportant la contre-lame, avec l'effort suffisant pour assurer la coupe du feuillard par la lame : celle-ci par son ergot d'extrémité, se glisse entre la dernière spire ou couche de la bobine et le feuillard, et en chevauchant alors un des bords de la contre-lame sur lequel est appuyé et maintenu le feuillard, prend ce dernier en cisaille entre elle et l'arête de butée de la contre-lame, et le coupe progressivement.

Un tel outil de décerclage peut être bien sûr manipulé à la main avec une poignée latérale support, bien qu'il soit préférable de l'utiliser avec un dispositif automatique tel que décrit ci-après : l'outil comporte alors, pour bien le positionner et le maintenir sur et par rapport au feuillard, une pièce de guidage placée à côté de la contre-lame avec une surface d'appui, face à la semelle de la lame de coupe et dont le bord de guidage est parallèle à l'arête de butée de la contre-lame.

Le résultat est un nouvel outil de décerclage qui peut être également et de préférence entièrement automatisé en le montant par une articulation à l'extrémité d'un bras basculant d'un dispositif de décerclage que l'on place à côté des bobines à décercler : dans une position de basculement dudit bras, dégageant l'outil de sa zone d'intervention de coupe, après qu'il ait effectué ladite découpe du feuillard dont il a saisi une extrémité entre sa lame de maintien et sa contre-lame avec une surface d'appui, le dispositif comporte une tête d'entraînement également basculante, contre un galet associé à l'outil et apte à recevoir en appui ledit feuillard.

Pour pouvoir récupérer et éliminer alors le feuillard ainsi coupé, le dispositif automatique de décerclage comporte dans le prolongement de l'outil placé dans la position de basculement et d'entrainement du feuillard par ladite tête, tout moyen de récupération du feuillard, vers lequel ladite tête associée au galet l'entraîne depuis la zone d'intervention, où il a été coupé.

Un tel outil et dispositif de décerclage suivant l'invention répondent bien au problème posé, en garantissant une opération de décerclage dans de meilleures conditions que celles effectuées à ce jour, tel que manuellement ou semi-automatiquement. En effet, outre la garantie et la fiabilité de découpe d'un tel outil qui immobilise le feuillard dans un espace de coupe bien délimité, il est possible d'intervenir en tout endroit de la périphérie du feuillard, hors de la position de son agrafe, et quelle que soit la tension du feuillard : en effet, dans la présente invention, la coupe peut s'effectuer en tout point d'un feuillard très tendu, le décollement de celui-ci s'effectuant au fur et à mesure de la coupe grâce aux caractéristiques de l'outil de décerclage, qui n'a pas besoin de glisser et d'engager préalablement une grande partie de sa lame sous le feuillard, comme dans les cisailles connues et utilisées à ce jour, qui ne peuvent donc opérer qu'à côté de ladite agrafe. L'outil suivant l'invention assure ainsi une rapidité d'exécution, et cela dans des conditions de sécurité optimales, surtout bien sûr en utilisant un dispositif entièrement automatisé ne nécessitant pas d'intervention humaine.

On pourrait citer d'autres avantages de la présente invention mais ceux cités ci-dessus en montrent déjà suffisamment pour en prouver la nouveauté et l'intérêt. La description et les figures ci-après représentent deux exemples de réalisation de l'invention mais n'ont aucun caractère limitatif. D'autres réalisations sont possibles dans le cadre de la portée et de l'étendue de cette invention, en particulier en l'utilisant dans d'autres domaines que le décerclage des bandes métalliques et en utilisant d'autres dispositifs particuliers de réalisation mais qui auraient les mêmes fonctions.
La figure 1 est une vue latérale d'un outil de décerclage suivant l'invention, tel qu'il pourrait être manipulé à la main ou utilisé dans le dispositif de la figure 3.
La figure 2 est une vue du dessus de l'outil de la figure 1.
La figure 3 est une vue latérale d'un dispositif automatique de décerclage incluant l'outil des figures 1 et 2.

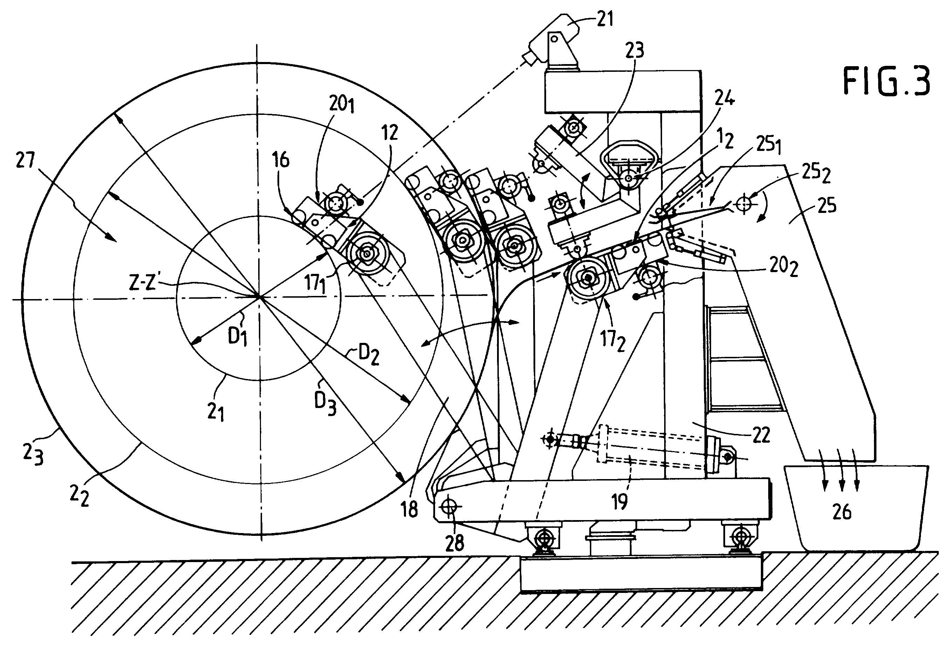

D'une manière connue, les bobines 1 de bandes de matériau, qui peut être de l'aluminium, papier, acier, plastique, etc... mais qui ici est considéré comme métallique, sont maintenues enroulées par un feuillard 1 et suivant un diamètre D extérieur donné, qui est fonction du nombre de couches d'enroulement des bandes, tel que sur la figure 3 les bobines 2₁, 2₂, 2₃, respectivement de diamètre D₁, D₂, D₃ de la plus petite à la plus grande; ledit feuillard 1 pour chaque bobine, est situé périphériquement sur leur dernière couche ou spire représentée par le trait plein correspondant à leur diamètre extérieur représenté sur la figure 3.

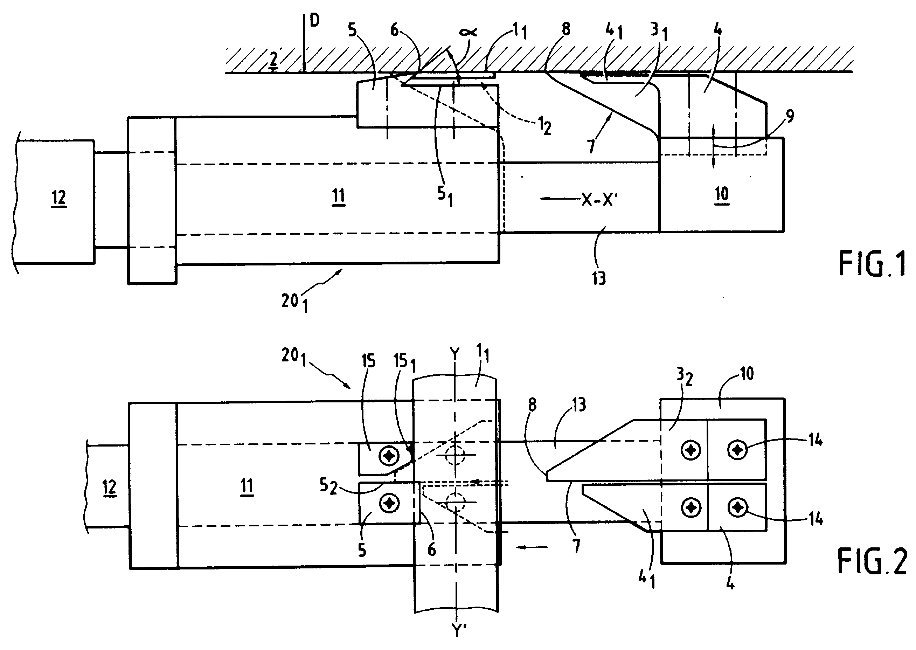

L'outil de décerclage 20 suivant la présente invention, tel que représenté sur les figures 1 et 2, est placé perpendiculairement par rapport au plan défini par la ligne médiane YY' du feuillard 1₁.

La lame de coupe 3 dudit outil de décerclage 20 comporte une âme 3₁ de forme générale triangulaire définissant le plan de coupe de direction XX', donc perpendiculaire à la ligne médiane YY' du feuillard 1₁ est en fait, parallèle à l'axe ZZ' de la bobine 2, et une semelle 3₂ qui est perpendiculaire et solidaire à ladite âme 3₁ ; cette lame de coupe 3 est montée sur un support mobile 10, linéairement dans la direction XX' de coupe et par rapport au corps 11 de l'outil 20 : le mouvement et la transmission d'effort à ce support mobile 10 par rapport audit corps 11 est assuré par une tige 13 qui peut être celle d'un vérin télescopique intégré au corps 11 de l'outil.

L'extrémité distale 8, par rapport à ce support 10, de ladite lame 3, se termine en pointe apte à s'enfiler sous ledit feuillard 1 : de plus, elle peut être en forme d'ergot sur lequel la pointe de l'âme 3₁ se termine en suivant l'arête commune avec la semelle 3₂ qui est alors légèrement incurvée au-dessus de sa surface supérieure, et dont la tranche est également en pointe : ledit ergot 8 ainsi formé est d'autant plus apte à s'enfiler sous ledit feuillard 1, entre celui-ci et la dernière couche de matériau de la bobine 2 qu'il encercle.

Une contre-lame 5 fixe, avec une surface d'appui 5₁ du feuillard 1 et montée solidaire du corps 11 de l'outil 20, comporte une arête 6 de butée en ferme d'ergot linéaire, perpendiculaire à la direction XX' de coupe, et en saillie au-dessus de la surface d'appui 5₁ que l'on positionne en regard dudit feuillard 1, et qui est parallèle et située au-dessous de la semelle 3₂ de la lame de coupe 3; un des bords 5₂ de ladite contre-lame 5 étant situé dans l'alignement d'une face de l'âme 3₁ de telle sorte qu'en se déplaçant vers le corps 11 de l'outil, celle-ci vient tangenter ledit bord 5₂. Ainsi, pendant le mouvement linéaire de rapprochement du support 10 vers le corps de l'outil 11, l'ergot 8 de la lame de coupe 3 s'avance contre le bord du feuillard puis pousse légèrement et éventuellement celui-ci jusqu'à ce que son bord opposé vienne contre l'arête 6 de butée de la contre-lame 5 avec une surface d'appui 5₁, puis se glisse entre ce feuillard 1₁ et la bobine 2, permettant alors au bord 7 coupant de l'âme 3₁, et qui est donc bien sûr affûtée pour cela, d'entailler progressivement ledit feuillard 1₁ jusqu'à le couper complètement.

Pour cela, il est préférable que l'extrémité distale ou ergot 8 de la lame 3 puisse alors croiser et dépasser dans son déplacement linéaire vers le corps 11 de l'outil 20, l'arête 6 de butée de la contre-lame 5 : ceci est possible par la forme générale triangulaire de la semelle 3₂ de la lame de coupe 3 qui est située d'un seul côté par rapport à l'âme 3₁ avec laquelle elle partage un bord commun, lequel côté étant celui opposé à celui de la face contre laquelle vient tangenter un des bords 5₂ de ladite contre-lame 5 : cette position de fin de découpe de l'outil est représentée aussi bien en vue de côté sur la figure 1 qu'en vue de dessus de la figure 2, en pointillés pour les extrémités distales de la lame de coupe 3. L'extrémité de la semelle 3₂ qui peut être incurvée pour constituer ledit ergot 8, est de préférence non pointue en vue de dessus suivant la figure 2, et au contraire, en pointe suivant une section de profil en forme de coin suivant la figure 1 et sur toute sa petite largeur dont la tranche peut même être affûtée pour mieux s'enfiler sous le feuillard 1.

Comme déjà indiqué précédemment, afin de saisir une des extrémités du feuillard 1₁ après sa découpe, une lame de maintien 4 est montée sur le même support 10 et comporte une semelle 4₁ placée parallèlement à celle de la lame 3 de coupe, du côté opposé par rapport à l'âme 3₁ et face à ladite contre-lame 5 dont elle recouvre la surface d'appui 5₁ lors du déplacement linéaire du support 10 vers le corps 11 de l'outil 20 en y pinçant l'extrémité 1₂ dudit feuillard. De plus, et pour pouvoir s'adapter à plusieurs épaisseurs différentes de feuillard, ladite lame de maintien 4 est associée et montée sur un dispositif à ressort 9 qui est solidaire et placé dans le support 10 : ce dispositif à ressort qui peut être de tout type et non représenté sur les figures, est apte à maintenir une pression de contact donnée entre la face inférieure de la lame de maintien 4 et la surface 5₁ de la contre-lame 5 entre lesquelles est donc maintenue ladite extrémité 1₂ du feuillard. Il est certain que la surface 5₁ d'appui de ladite contre-lame 5 doit être d'une largeur au moins égale à celle du feuillard 1, ainsi que l'amplitude de déplacement linéaire du support 10 par rapport au corps de l'outil 11.

Dans un mode de réalisation optionnel, en particulier en cas d'utilisation en usage manuel, il est préférable d'avoir une référence additionnelle d'appui du feuillard 1₁ : pour cela, ledit corps 11 comporte une pièce de guidage 15 placée à côté de la contre-lame 5 avec une surface d'appui face à la semelle 3₂ de la lame de coupe et dont le bord du guidage 15₁ est parallèle à l'arête de butée 6 de la contre-lame 5, tel que cela est représenté sur la figure 2 : ladite pièce de guidage 15 comporte également une encoche de biais sur l'un des angles d'extrémité de son bord de guidage 15₁ afin de libérer un espace à l'extrémité 8 de la lame de coupe 3 en fin de coupe, tel que représenté en pointillés sur cette figure 2, alors que la lame de maintien 4 pouvant être de dimension plus courte que la semelle 3₂ de la lame de coupe, vient juste s'arrêter en face de l'arête 6 de butée de la contre-lame 5. L'épaulement de l'arête 6 formant ergot peut être incliné d'un angle α aigu par rapport à ladite surface d'appui 5₁, afin de mieux y maintenir ledit feuillard 1.

L'ensemble des lames de coupe et d'appui, ainsi que la contre-lame et la pièce de guidage peuvent être fixés sur leur support respectif par toute vis d'assemblage 14, permettant en particulier leur interchangeabilité pour s'adapter à différents types de feuillards et/ ou les remplacer quand ils sont usés.

Dans le mode de réalisation suivant la figure 3, le dispositif de décerclage suivant l'invention, pouvant être entièrement automatisé, comporte un outil de décerclage 20, tel que représenté sur les figures 1 et 2, monté par une articulation 17 à l'extrémité d'un bras basculant 18 : ledit basculement de ce bras autour d'un axe 28, peut être assuré par tout être vérin linéaire 19 et permettre en particulier, l'ajustement de la position de l'outil de décerclage 20 sur la bobine 1, quel que soit son diamètre D. Ce diamètre D peut être mesuré préalablement par tout capteur de mesures 21, optique ou autre, permettant également de repérer la position du feuillard 1 sur ladite bande ou bobine 2, suivant et par rapport l'axe ZZ' de celle-ci : l'outil de décerclage 20 est alors déplacé et présenté de telle façon que le bord dudit feuillard 1₁, opposé à celui qui sera coupé en premier, soit situé au plus près contre l'arête 6 de la contre-lame 5. Pour faciliter ce positionnement et assurer l'appui de ladite arête 6 et de l'ergot 8 contre la bobine 2 sans toutefois l'abîmer, l'outil de décerclage 20 qui est monté sur l'articulation 17 par une poignée 12, comporte au moins deux roulements d'appui 16 contre la bobine 2 à décercler et aptes à guider l'orientation et l'appui de l'outil 20 de part et d'autre du feuillard 1 à couper. Les roulements peuvent être placés, quant à eux, de part et d'autre du corps 11 de l'outil 20, dont l'axe XX' principal est perpendiculaire au plan de la figure 3 et parallèle à ceux des roulements 16 qui comportent alors des encoches pour chevaucher le feuillard 1.

Pour aider alors éventuellement l'ergot 8 de la lame de coupe 3 à se glisser entre le feuillard 1 et la dernière spire de la bobine 2, ledit outil de décerclage 20 est associé à tout moyen de vibration connu et conçu pour cela, mais indépendant de la poignée support 12 et des roulements d'appui 16 qui eux, doivent rester fixes et immobiles par rapport à la bobine 2.

Dans une position de basculement du bras 18 qui peut être alors en butée arrière de rentrée du vérin 19, l'outil 20 est dégagé de sa zone 27 d'intervention de coupe et le dispositif comporte une tête 23 d'entraînement également basculante autour d'un axe 24 contre un galet associé à l'outil 20 et située sur le bras 18 : ce galet peut être constitué par ladite articulation 17₂ de la poignée support de l'outil; il est apte à recevoir en appui ledit feuillard 1 dont l'extrémité 1₂ est maintenue prisonnière dans l'outil 20₂ grâce à la lame de maintien 4 : l'entraînement du feuillard 1 peut ainsi être assuré par ladite tête 23 qui vient le prendre en étau contre ledit galet 17₂, la lame de maintien 4 étant dégagée de la contre-lame 5 pour libérer l'extrémité 1₂ du feuillard.

Ledit dispositif comporte dans le prolongement de l'outil 22 placé dans cette position de basculement et d'entraînement du feuillard 1 par la tête 23, tout moyen 25 de récupération du feuillard 1, vers lequel ladite tête 23 associée au galet 17₂ l'entraîne depuis la zone 27 d'intervention où il a été coupé. Le moyen 25 de récupération peut être soit une contre-lame 25₂ autour de laquelle on peut réenrouler ledit feuillard 1₂, guidé préalablement par une sorte d'entonnoir 25₁ depuis l'outil 20₂, ou un hacheur permettant de découper le feuillard en morceaux qui sont alors évacués dans toute gaine afin d'être récupérés dans un container 26.

L'ensemble des éléments composant ledit dispositif de découpe sont montés sur une charpente support 22 qui peut être fixe et ce sont alors les bobines 2 qui sont positionnées dans la zone de coupe 27 pour que l'outil 20 soit placé exactement sur le feuillard 1 à découper; mais dans un autre mode de réalisation, c'est la charpente 22 qui peut être mobile suivant une direction parallèle à l'axe ZZ' des bobines, pour présenter l'outil 20 dans le plan du feuillard 1; l'ensemble peut être automatisé en particulier grâce aux capteurs de repérage et de mesures 21 contrôlant la position relative de la bobine 2 par rapport à ce dispositif de décerclage.

## Revendications

1. Outil de décerclage (20) pour bobine (2), de bandes de matériau maintenues enroulées par au moins un feuillard (1), et comportant au moins une lame de coupe (3), caractérisé en ce que :
- ladite lame de coupe (3) comporte une âme (3₁) de forme générale triangulaire, définissant le plan de coupe de direction XX', et une semelle (3₂) qui lui est perpendiculaire et solidaire, et est montée sur un support mobile (10), linéairement dans la direction XX' de coupe et par rapport au corps de l'outil (20);
- l'extrémité distale (8), par rapport à son support (10), de ladite lame (3) de coupe se termine en pointe apte à s'enfiler sous ledit feuillard (1);
- une contre-lame (5) fixe, avec une surface d'appui (5₁) du feuillard (1) et montée solidaire du corps (11) de l'outil (20), comporte une arête (6) de butée en forme d'ergot linéaire, en saillie au-dessus de la surface d'appui (5₁) recevant ledit feuillard (1) et perpendiculaire à la direction XX' de coupe, l'un des bords (5₂) de ladite contre-lame (5) étant situé dans l'alignement d'une face de l'âme (3₁) de telle sorte qu'en se déplaçant vers le corps (11) de l'outil, celle-ci vient tangenter ledit bord (5₂), la surface d'appui (5₁) de ladite contre-lame (5) étant parallèle et située au-dessous de la semelle (3₂) de la lame de coupe (3).

2. Outil de décerclage (20) suivant la revendication 1, caractérisé en ce que la semelle (3₂) de la lame de coupe est de forme générale triangulaire et est située d'un seul côté par rapport l'âme (3₁) avec laquelle elle partage un bord commun, lequel côté étant celui opposé à celui de la face contre laquelle tangente un des bords (5₂) de ladite contre-lame.

3. Outil de décerclage (20) suivant la revendication 2, caractérisé en ce qu'une lame de maintien (4), montée sur le même support (10) comporte une semelle (4₁) disposée parallèlement et du côté opposé à celle de la lame (3) de coupe par rapport à l'âme (3₁), et face à ladite contre-lame (5) dont elle recouvre la surface d'appui (5₁) lors du déplacement linéaire du support (10) vers le corps (11) de l'outil (20).

4. Outil de décerclage (20) suivant la revendication 3, caractérisé en ce que ladite lame de maintien (4) est associée à un dispositif à ressort (9) solidaire du support (10) et apte à maintenir une pression de contact donnée entre la face inférieure de la lame (4) et la surface (5₁) de la contre-lame (5).

5. Outil de décerclage (20) suivant l'une quelconque des revendications 1 à 4, caractérisé en ce que son corps (11) comporte une pièce de guidage (15) placée à côté de la contre-lame (5) avec une surface d'appui, face à la semelle (3₂) de la lame de coupe et dont le bord de guidage (15₁) est parallèle à l'arête de butée (6) de la contre-lame (5).

6. Dispositif de décerclage comportant un outil de décerclage (20) suivant l'une quelconque des revendications 1 à 5, caractérisé en ce que ledit outil (20) est monté par une articulation (17) à l'extrémité d'un bras basculant (18) et, dans une position de basculement dégageant l'outil (20) de sa zone (27) d'intervention de coupe, le dispositif comporte une tête (23) d'entraînement, également basculante, contre un galet associé à l'outil (20) et apte à recevoir en appui ledit feuillard (1).

7. Dispositif de décerclage suivant la revendication 6, caractérisé en ce que ladite articulation (17) de l'outil (20) constitue également ledit galet d'appui pour l'entraînement du feuillard (1) par ladite tête (23).

8. Dispositif de décerclage suivant l'une quelconque des revendications 6 ou 7, caractérisé en ce qu'il comporte dans le prolongement de l'outil (20₂) placé dans la position de basculement et d'entraînement du feuillard (1) par ladite tête (23), tout moyen (25) de récupération du feuillard (1), vers lequel ladite tête (23) associée au galet (17₂) l'entraîne depuis la zone (27) d'intervention, où il a été coupé.

9. Dispositif de décerclage suivant l'une quelconque des revendications 6 à 8, caractérisé en ce que ledit outil de décerclage (20) est monté sur l'articulation (17) par l'intermédiaire d'une poignée (12) comportant au moins deux roulements d'appui (16) contre la bobine (2) à décercler et apte à guider l'orientation et l'appui de l'outil (20) de part et d'autre du feuillard (1) à couper.

10. Dispositif de décerclage suivant l'une quelconque des revendications 6 à 9, caractérisé en ce que ledit outil de décerclage (20) est associé à tout moyen de vibration apte à aider l'ergot (8) de sa lame de coupe (3) à se glisser entre ledit feuillard (1) et la bobine (2).
